# EUROPEAN PATENT APPLICATION

(11) **EP 1 148 235 A1**
(43) Date of publication of application: **24.10.2001**
(21) Application number: 00114656.2
(22) Date of filing: 07.07.2000
(51) Int. Cl.: F04B 27/08

(54) **Method for manufacturing hollow piston of compressor**

(30) Priority: 18.04.2000 KR 2026700
(71) Applicant: Halla Climate Control Corp., Taejon-si 306-230 (KR)
(72) Inventor: Ahn, Hew Nam, c/oDormitory of Halla Climate Contr., Taejon-si, 306-230 Korea (KR)
(74) Representative: Koepe, Gerd L., Dipl.-Chem.

(57) **Abstract**

A method for manufacturing the hollow piston of a swash plate compressor comprises the steps of forming a dual body (110) and two caps (12) separately. Welding surfaces (10a,10b) are formed on the two opposing heads for welding the caps to the dual body by friction welding with relatively rotating welding surfaces. After a turning step to cut the circumferential surfaces, they are coated with a wear resisting layer and ground to obtain uniform surface roughness. Then the hemispherical shoe sockets (1c) are formed by cutting the rough cavities (11c) of the bridges (11a). Finally the dual body is cut into two pistons which are trimmed separately to obtain the dimensions of the finished piston.

## Description

### BACKGROUND OF THE INVENTION

### Field of the Invention

The present invention relates, in general, to a method for manufacturing the piston of a variable capacity type of swash-plate compressor and, more particularly, to a method, which is capable of easily manufacturing a lightweight, hollow piston for a compressor.

### Description of the Prior Art

As well known to those skilled in the art, a compressor has been employed as one of the main elements of an air-conditioning apparatus for automobiles. The compressor is an apparatus that selectively receives power from an engine by the intermittent operation of an electromagnetic clutch, converts refrigerant gas to a condition of a high temperature and a high pressure by means of a compressing process, and discharges the refrigerant gas to the condenser.

A swash-plate compressor is a sort of compressor. The swash-plate compressor is operated in such a way that a swash-plate, which is mounted to a drive shaft and is in the form of a disk, is rotated together with the drive shaft and a plurality of pistons are linearly reciprocated in the bores of a cylinder by the rotation of the swash-plate. In the process of the reciprocating movement of the pistons, refrigerant gas is sucked into the cylinder, compressed in the cylinder, and, thereafter, discharged to a condenser.

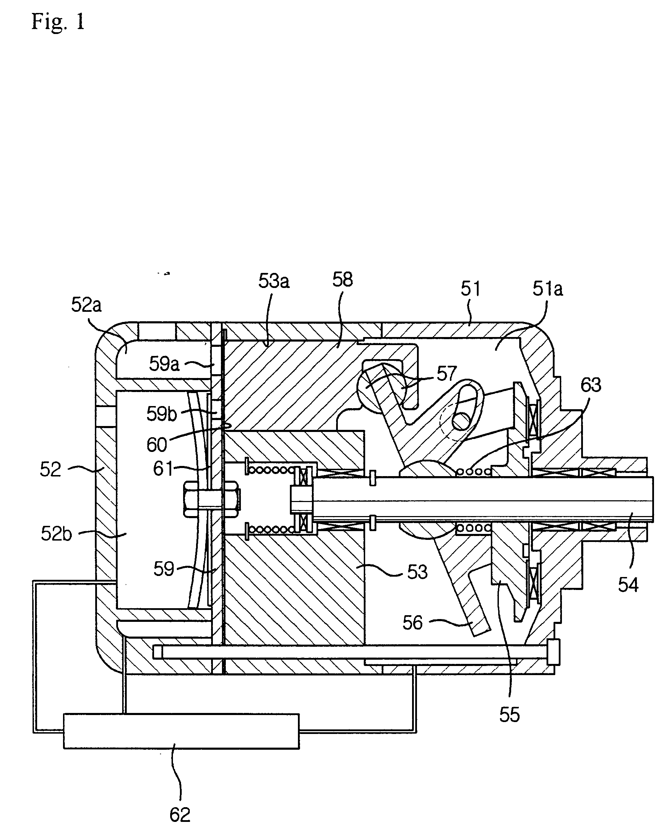

Fig. 1 is a sectional view showing a variable capacity type of a swash-plate compressor. As shown in Fig. 1, the variable capacity type of swash-plate compressor comprises front and rear housings 51 and 52 defining a crank chamber 51a, a suction chamber 52a and a discharge chamber 52b, a cylinder block 53 having a plurality of bores 53a arranged circumferentially and being positioned in the front and rear housings 51 and 52, a drive shaft 54 rotatably supported in the center portion of the cylinder block 53 while penetrating the center portion of the 'front housing 51 and being inserted into the crank chamber 51a, a lug plate 55 fixed around the drive shaft 54 so as to be rotated together with the drive shaft 54 in the crank chamber 51a, a swash-plate 56 mounted around the drive shaft 54 and hingedly connected to one side of the lug plate 55 so that its tilt angle is varied while being rotated by the rotation of the lug plate 55 and sliding on the drive shaft 54, a plurality of pistons 58 connected to the peripheral portion of the swash-plate 56 via a shoe 57 so as to be respectively reciprocated in the bores 53a of the cylinder 53, and a valve unit 60 positioned between the cylinder block 53 and the rear housing 52 so as to control the suction and discharge of refrigerant gas by the pressure variation in bores due to the reciprocating movement of the pistons 58. The variable capacity type of swash-plate compressor further comprises a pressure control valve 62 for controlling the inclination of the swash plate. The inclination of the swash plate changes in accordance with the difference between the pressure in the crank chamber and the pressure in the cylinder bores. The displacement of the compressor varies in accordance with the inclination of the swash plate.

In the variable capacity type of swash-plate compressor described above, a process wherein refrigerant gas transferred from an evaporator is compressed and discharged to a condenser is as follows. When the drive shaft 54 is rotated by means of the power of an engine, the lug plate 55 is rotated. While the swash-plate 56 is rotated as the lug plate 55 is rotated, the pistons 58 are reciprocated to a distance proportional to the tilt angle of the swash-plate 56. In the process of the reciprocation of the pistons 58, the refrigerant gas is sucked from the suction chamber 52a into the bores 53a while each piston 58 is moved rearward, and the refrigerant gas compressed and discharged to the discharge chamber 52b at a high pressure, through a refrigerant gas passage while each piston 58 is moved forward.

In the above refrigerant gas compressing process, since the weight of the piston 58 acts toward the opposite direction of the moving direction of the piston 58 and functions as an inertia force to reduce the rotating force of the drive shaft 54, the weight of the piston 58 has great influence upon the compression efficiency of the compressor. For this reason, the piston of a compressor is generally made of lightweight material so as to improve the compression efficiency of the compressor. Recently, a hollow piston, which is more lightweight, is developed and employed for the variable capacity type of compressor.

The hollow piston has an inner cavity in its cylindrical head that occupies a significant portion of the piston volume. The hollow piston has a small inertia proportional to the weight thereof because the ratio of weight to volume is low. Therefore, the hollow piston can greatly improve the compression performance of a compressor in comparison with a solid piston that generates great inertia force during its reciprocation because the weight of the solid piston is great. The hollow piston is difficult in manufacture in comparison with the solid piston that may be manufactured by forming an unfinished piston by means of a forging or die casting process and, thereafter, machining the unfinished piston into a complete piston. That is, since it is almost impossible to manufacture the hollow piston into a single body by means of a forging or die casting process, the hollow piston should be manufactured by forming a body and a cap separately and bonding the body and the cap together into a piston. Therefore, in accordance with this manufacturing method, the inferiority ratio in finished pistons and the manufacturing cost of the piston are increased.

However, since the hollow piston has an advantage of compression efficiency, there have been made various attempts to develop a method of easily fabricating the hollow piston.

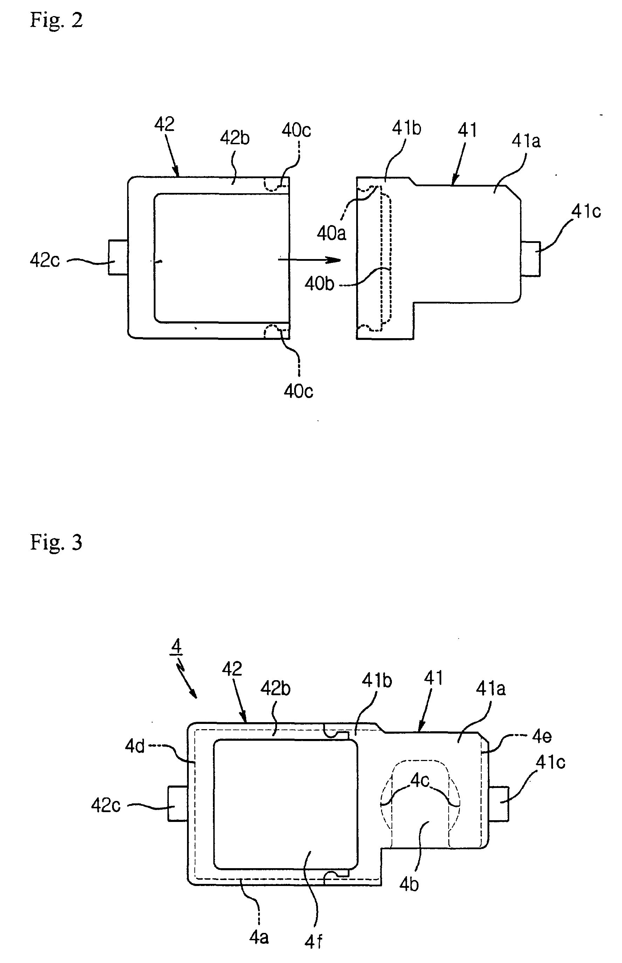

In accordance with a typical piston manufacturing method illustrated in Figs. 2 to 4, a body 41 and a cap 42 are separately formed, the body 41 and the cap 42 are machined and temporarily combined together, and the body 41 and the cap 42 are welded into a piston in a vacuum state by means of an electronic beam welding.

In detail, as shown in Fig. 2, the body 41 is formed by means of a forging or die casting process using aluminum alloy material so as to have a central bridge portion 41a, a head portion 41b formed at one end of the bridge portion 41a, and a grip protrusion 41c formed at the other end of the bridge portion 41a, and, meanwhile, the cap 42 is formed by means of a forging or die casting process using aluminum alloy material so as to have a head portion 42b provided with an open cavity and a grip protrusion 42c formed on the closed side of the head portion 42b (a forging or die casting step).

Thereafter, the head portions 41b and 42b are cut along the dotted lines in Fig. 2 to form welding surfaces 40a and 40c so that the head portion 42b of the cap 42 is fitted into the head portion 41b of the body 41 (a welding surface cutting step).

The head portion 42b of the cap 42 is fitted into the head portion 41b of the body 41, and the welding surface 40a of the body'41 is welded to the welding surface 40c of the cap 42 into an unfinished piston by means of the electronic beam welding while the combined body 41 and cap 42 are fixedly disposed on a jig (not shown) (an electronic beam welding step).

Subsequently, the circumferential surface of the unfinished piston is cut to form a head circumferential surface 4a (a cutting after welding step). Teflon is coated on the entire surface of the unfinished piston to form a wear resisting layer (a coating step). The head circumferential surface 4a is ground, and bottom side of the bridge portion 41a is cut away to form a swash-plate receiving cavity 4b and a shoe socket 4c (a cutting step). Finally, the grip protrusions 41c and 42c are cut away to form a front surface 4d and a rear surface 4e.

However, the conventional piston manufacturing method is problematic in that the welding surfaces 40a and 40c must be accurately formed because the body 41 and the cap 42 are formed separately, a relatively long period of time, that is, more than 10 seconds, is required to weld the body 41 and the cap 42 at the welding surfaces 40a and 40c, and the assembly and post-assembly treatment of the body 41 and the cap 42 are relatively difficult and complicated, thereby reducing the productivity in manufacturing the pistons and increasing the inferiority ratio in finished pistons. Additionally, since the electronic welding must be performed in a vacuum state so as to prevent the body 41 and the cap 42 of an aluminum alloy from being oxidized, expensive equipment is required, thereby increasing the equipment cost. Furthermore, since fine holes are generated in the piston 4 in the process of the electronic beam welding, the durability of the piston is insufficient and the piston comes short of refrigerant gas and oil due to the leakage of the refrigerant gas and the oil through the holes.

For reference, Japanese Pat. Publication No. 9-256952 discloses a piston manufacturing method, comprising the steps of forming an unfinished dual piston having two piston portions, machining the front surface, rear and outer circumferential surfaces of the dual piston, coating the dual piston, forming swash-plate receiving cavities and shoe sockets and parting the dual piston along its central line, thereby completing two pistons.

The conventional method in accordance with the Japanese Pat. Publication No. 9-256952 allows the productivity in manufacturing pistons to be improved. However, the method is problematic in that it cannot be applied to the manufacture of hollow pistons. That is, the method can be applied only to the manufacture of solid pistons.

### SUMMARY OF THE INVENTION

Accordingly, the present invention has been made keeping in mind the above problems. An object of the present invention is to provide a method for manufacturing a hollow piston for a compressor, which is capable of reducing the inferiority ratio in finished products and the equipment cost for manufacturing the piston, lengthening the endurance period of the hollow piston, improving the productivity of the piston, and reducing the manufacturing cost of the piston.

In order to accomplish the above object, the present invention provides a method for manufacturing the hollow piston of a compressor, comprising the steps of forming a dual body and two caps separately, the dual body having two body portions that are symmetrically integrated and respectively have bridge portions and head portions, the two caps respectively having head portions that respectively have open cavities and grip protrusions that are respectively formed on the closed side surfaces of the head portions, the bridge portions respectively having rough cavities; forming welding surfaces on two couples of the opposing portions of the head portions of the dual body and the caps; welding the caps to the dual body at their welding surfaces using frictional heat by relatively rotating at least one of the caps and the dual body while the welding surfaces of the dual body are in contact with the welding surfaces of the caps, thereby forming an unfinished dual hollow piston; forming the outer circumferential surface of the piston by cutting the outer circumferential surface of the unfinished dual piston; forming a wear resisting layer on the surface of the unfinished dual piston by coating the unfinished dual piston; forming head outer circumferential surfaces by grinding the outer circumferential surfaces of the head portions of the unfinished dual piston; forming hemispherical shoe sockets by cutting surfaces defining swash-plate receiving cavities after forming the swash-plate receiving cavities by cutting surfaces defining the rough cavities of the bridge portions; and parting the unfinished dual piston along its central line into two unfinished pistons, and cutting front and rear surfaces of the unfinished dual piston into two completed pistons.

In addition, the present invention provides a method for manufacturing the hollow piston of a compressor, comprising the steps of forming a dual body and two caps separately, the dual body having two body portions that are symmetrically integrated and respectively have bridge portions and head portions, the two caps respectively having head portions that respectively have open cavities and grip protrusions that are respectively formed on the closed side surfaces of the head portions, the bridge portions respectively having rough cavities; forming welding surfaces on two couples of the opposing portions of the head portions of the dual body and the caps; welding the caps to the dual body at their welding surfaces using frictional heat by relatively rotating at least one of the caps and the dual body while the welding surfaces of the dual body are in contact with the welding surfaces of the caps, thereby forming an unfinished dual hollow piston; cutting both sides and the outer circumferential surface of the unfinished dual piston; forming swash-plate receiving cavities by cutting the surfaces defining the rough cavities of the bridge portions; forming a wear resisting layer on a surface of the unfinished dual piston by coating the unfinished dual piston; parting the unfinished dual piston along its central line into two unfinished pistons; and forming hemispherical shoe sockets by cutting surfaces defining the swash-plate receiving cavities, thereby completing two completed pistons.

Furthermore, the present invention provides a method for manufacturing the hollow piston of a compressor, comprising the steps of forming a dual body and two caps separately, the dual body having two body portions that are symmetrically integrated and respectively have bridge portions and head portions, the two caps respectively having head portions that respectively have open cavities and grip protrusions that are respectively formed on the closed side surfaces of the head portions, the bridge portions respectively having rough cavities; forming welding surfaces on two couples of the opposing portions of the head portions of the dual body and the caps; welding the caps to the dual body at their welding surfaces using frictional heat by relatively rotating at least one of the caps and the dual body while the welding surfaces of the dual body are in contact with the welding surfaces of the caps, thereby forming an unfinished dual hollow piston; cutting both sides and the outer circumferential surface of the unfinished dual piston; forming swash-plate receiving cavities by cutting surfaces defining the rough cavities of the bridge portions; forming a wear resisting layer on a surface of the unfinished dual piston by coating the unfinished dual piston; forming hemispherical shoe sockets by cutting surfaces defining the swash-plate receiving cavities; and parting the unfinished dual piston along its central line into two unfinished pistons, thereby completing two completed pistons.

### BRIEF DESCRIPTION OF THE DRAWINGS

The above and other objects, features and other advantages of the present invention will be more clearly understood from the following detailed description taken in conjunction with the accompanying drawings, in which:
Fig. 1 is a sectional view showing a variable capacity type of a conventional swash-plate compressor;
Fig. 2 is a view showing a hollow piston in a separate state in accordance with the conventional method;
Fig. 3 is a view showing the hollow piston in a welded state in accordance with a conventional method;
Fig. 4 is a sectional view showing the completed hollow piston in accordance with the conventional method;
Fig. 5 is a view showing a hollow piston in a separate state in accordance with a first embodiment of the present invention;
Fig. 6 is a view showing the hollow piston in a welded state in accordance with the first embodiment of the present invention;
Fig. 7 is a view showing the hollow piston of the first embodiment wherein the outer circumferential surfaces of its head portions are machined;
Fig. 8 is a view showing the hollow piston of the first embodiment in a parted state;
Fig. 9 is a sectional view showing the completed hollow piston of the first embodiment;
Fig. 10 is a view showing a hollow piston in a separate state in accordance with a second embodiment of the present invention;
Fig. 11 is a sectional view showing the completed hollow piston of the second embodiment;
Fig. 12 is a view showing a hollow piston in a separate state in accordance with a third embodiment of the present invention;
Fig. 13 is a sectional view showing the completed hollow piston of the third embodiment.

### DESCRIPTION OF THE PREFERRED EMBODIMENTS

Reference now should be made to the drawings, in which the same reference numerals are used throughout the different drawings to designate the same or similar components.

### [First Embodiment]

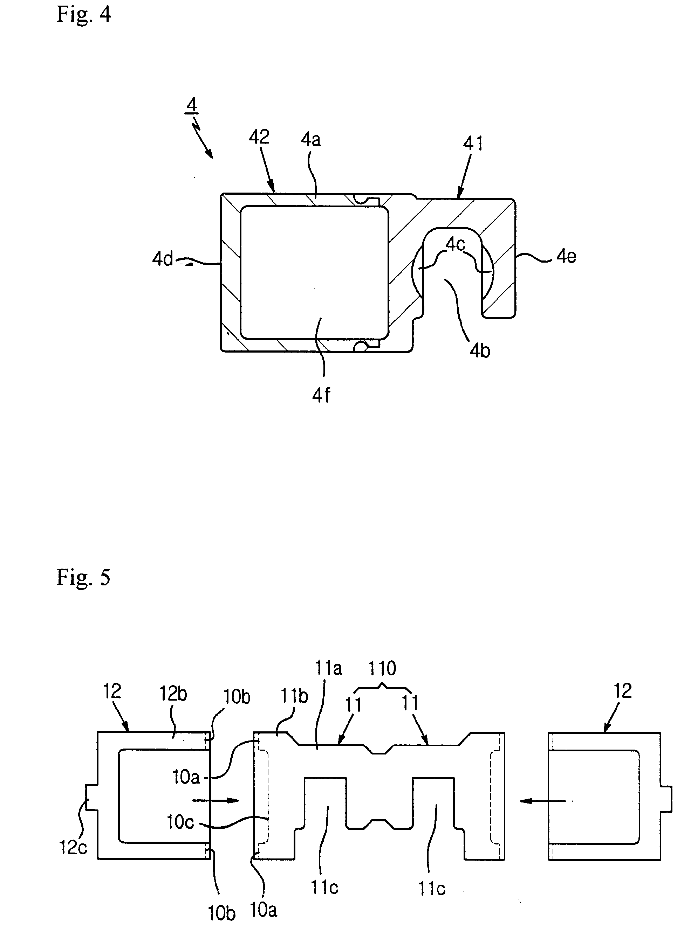

With reference to Figs. 5 to 9, a method for manufacturing a hollow piston for a compressor in accordance with a first embodiment is described.

### 1. Forming step

First of all, a dual body 110 and two caps 12 are individually formed. The dual body 110 has two body portions 11 that are symmetrically integrated and respectively have bridge portions 11a and head portions 11b. The two caps 12 respectively have head portions 12b respectively having open cavities and grip protrusions 12c respectively formed on the closed side surfaces of the head portions 12b. The dual body 110 and the two caps 12 may be preferably formed by means of a forging or casting process.

In more detail, as shown Fig. 5, each body portion 11 of the dual body 110 has a bridge portion 11a having a rough cavity 11c opened to the outside and a head portion 11b integrated with the bridge portion 11a at one side of the bridge portion 11a. The two body portions 11 are integrated into the dual body 110 while being symmetrically arranged side by side. In detail, the two body portions 11 are integrated into the dual body 110 with their two bridge portions 11a being in contact with each other. Since the two bridge portions 11a are in contact with each other, two head portions 11b are situated on opposite sides.

Each of the caps 12 has the cylindrical head portion 12b whose one side is open and the grip protrusion 12c that is formed on the closed surface of the cap 12

The dual body 11 and the caps 12 are all made of aluminum alloy by means of a forging or casting process, and are formed to be thick so as to have a machining clearance.

### 2. Cutting before welding step

As illustrated in Fig. 5, in this step, two couples of the opposing portions of the head portions 11b and 12b of the dual body 110 and the caps 12 are cut to have welding surfaces 10a and 10b at which the dual body 110 and the caps 12 are welded together.

This step is performed by means of a simple planning process. Since the welding surfaces 10a and 10b are formed by means of a simple planning process only so as to provide the flatness and surface roughness suitable for a friction welding described below, the cutting process for this step is simple in comparison with the cutting process for the conventional piston. Therefore, this step allows the inferiority ratio of finished products and the manufacturing cost to be decreased effectively.

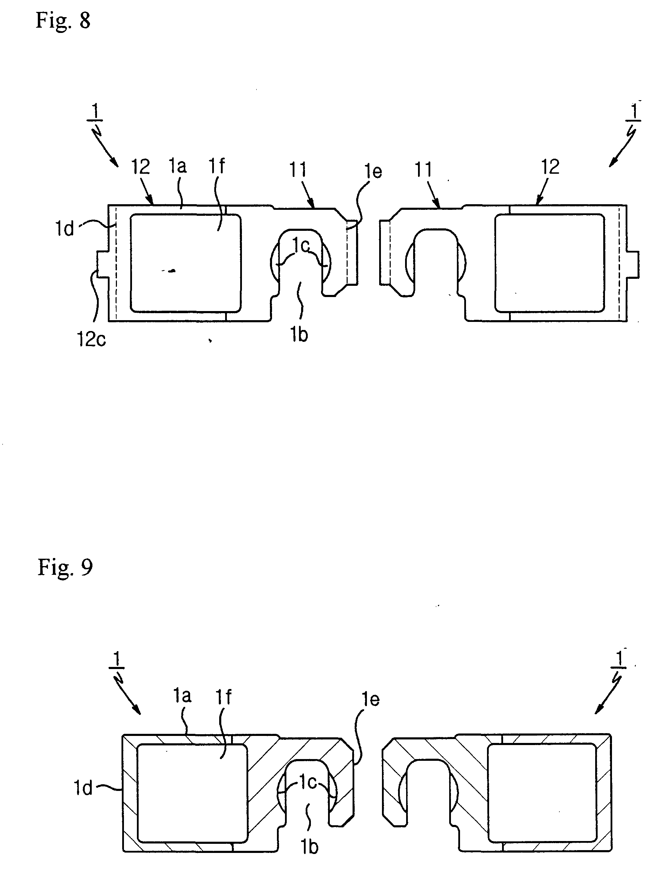

In addition, if the central portions of the surfaces, at which the welding surfaces 10a are formed, are cut to form depressions 10c in a same step where the welding surfaces 10a and 10b are formed, an inner cavity 1f becomes greater when the body portion 11 and the cap 12 are assembled into a hollow piston 1 as shown in Fig. 9.

### 3. Friction welding step

In this step, the caps 12 are pressed and rotated while the welding surfaces 10a of the dual body 110 are in contact with the welding surfaces 10b of the caps 12 and the grip protrusions 12c of the caps 12 are supported by a jig. Frictional heat is generated on the welding surfaces 10a and 10b due to the pressing and rotation of the caps 12, and the welding surfaces 10a and 10b are welded due to the frictional heat. As a result, the caps 12 are welded to the dual body 110 at both sides of the dual body 110. That is, there is obtained an unfinished dual piston 10 in which two piston portions respectively having inner cavities are integrated into a single body.

The step may be performed at a normal temperature in the atmosphere by means of a simple device that is capable of pressing and rotating the caps 12. Therefore, this step allows the equipment cost to be decreased. Additionally, the conventional electronic beam welding process requires about 10 seconds, while this friction welding process requires about 5 seconds. Therefore, the productivity in manufacturing pistons is increased. Furthermore, since the bonding strength between the welding surfaces 10a and 10b is great, the durability of the piston is improved.

In order to generate friction between the welding surfaces 10a and 10b, the following methods may be employed besides the foregoing method in which the caps 12 are pressed and rotated while the dual body 110 is fixed. Another method is to utilize relative rotation that is generated when one of the dual body 110 and the caps 12 is stopped while the dual body 110 and the caps 12 are rotated in a same direction. A further method is to rotate the dual body 110 while the caps 12 are pressed in inner directions. In these cases, effects similar to the effect of the foregoing method are obtainable.

### 4. Cutting after welding step

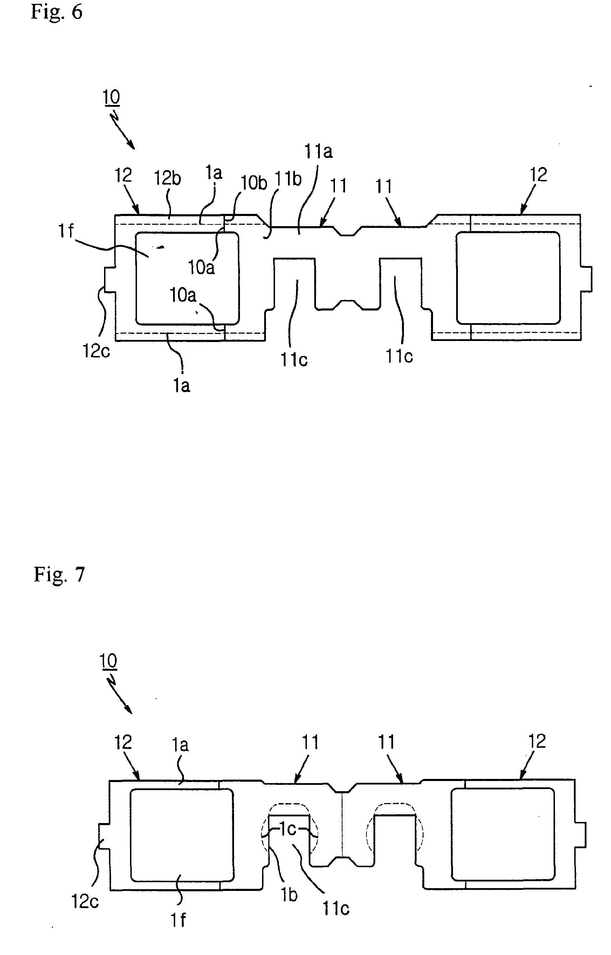

In this step, the circumferential surfaces of the unfinished dual piston 10 are cut while the unfinished piston 10 obtained in the friction welding step is fixed to a jig (not shown), so that a head circumferential surface 1a (illustrated by dotted lines in Fig. 6) is formed.

### 5. Coating step

In this step, the unfinished dual piston 10 is coated to form a wear resisting layer. The wear resisting layer consists of lubricative wear resisting material such as Teflon, and serves to reduce the speed of wear so as to lengthen the endurance period of the piston and to eliminate fine holes that may reduce the compression performance of the compressor.

### 6. Grinding step

In this step, the head circumferential surface 1a of the unfinished dual piston 10 is ground to have a uniform surface roughness so as to minimize the friction between the inner surface of the cylinder bore of a compressor and the head circumferential surface 1a of the unfinished dual piston 10 while the piston is reciprocated within the cylinder bore.

### 7. Cavity forming step

In this step, the surfaces defining the rough cavities 11c of the bridge portions 11a are cut to form swash-plate receiving cavities 1b into which swash-plates 1b are respectively inserted, and the surfaces defining the swash-plate receiving cavities 1b are cut to form shoe sockets 1c on which hemispheric shoes are seated. When the piston is connected with a swash plate while each of the hemispheric shoes is seated on each of the shoe sockets 1c and the swash plate is inserted into the shoe, the friction between the piston and the swash-plate is reduced and the piston is reciprocated effectively in accordance with the variation of the tilt angle of the swash-plate.

### 8. Cutting step

In this step, the unfinished dual piston 10 is parted into two unfinished pistons along its vertical central line, the two grip protrusions 12c are cut away, and both side surfaces 1d and 1e of each of two unfinished pistons are cut. As a result, there are completed two pistons that can be reciprocated smoothly within the cylinder bores.

In the method for manufacturing a hollow piston for a compressor, since a minimal machining is performed only to prepare the welding surfaces 10a and 10b for friction welding, the machining process before the welding process can be simplified. Since a friction welding process for bonding the dual body 110 and the caps 12 together may be performed at a normal temperature in the atmosphere by means of the simple, mechanical rotation, it is not necessary to employ expensive equipment, thus reducing the equipment cost for manufacturing the piston. Additionally, since each of the machining process and the coating process can be applied to the two piston portions at the same time, the number of manufacturing processes can be reduced in comparison with the conventional method in which a machining process and a coating process must be performed to every individual piston. Since the period of time for the welding process is short, that is, about 5 seconds, the inferiority ratio in finished products can be reduced and the productivity of the piston can be improved. In brief, the advantages of the method of the present invention are obvious in comparison with the defects of the conventional method wherein the material must be cut accurately so as to temporarily combine the body and the cap before welding and the body must be welded to the cap in a vacuum state so as to prevent the two parts from being oxidized. In addition, since oxidation does not occur in the process of performing the method of the present invention, fine holes are not generated in the piston. Therefore, in the hollow piston manufactured in accordance with the present invention, the endurance period of the piston is lengthened and the compression performance of the compressor is not reduced in comparison with the conventional hollow piston.

### [Second Embodiment]

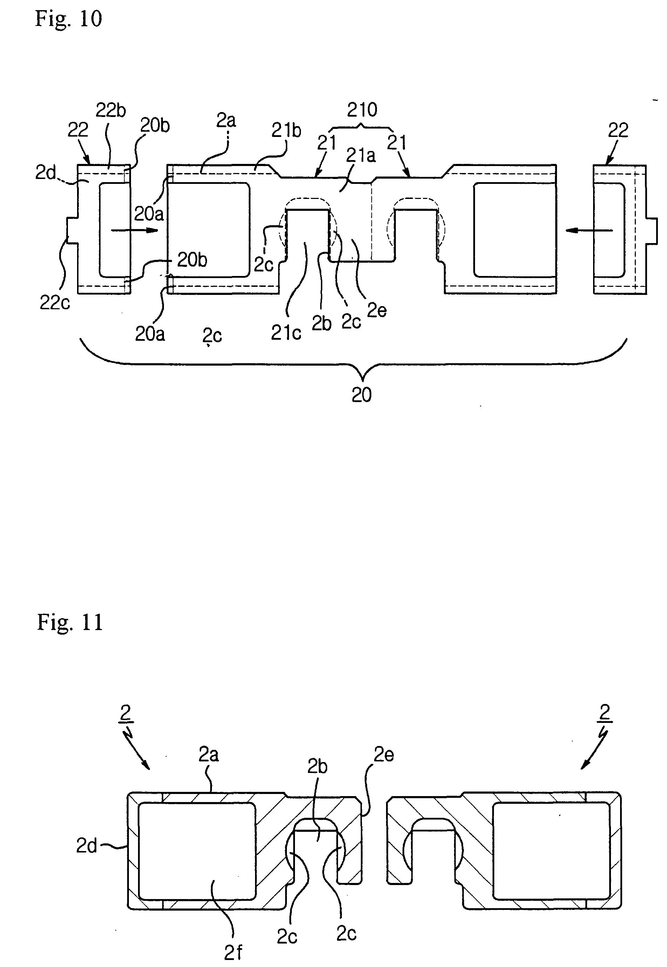

With reference to Figs. 10 and 11, a method for manufacturing a hollow piston for a compressor in accordance with a second embodiment is described.

The method of the present embodiment is similar to the method of the first embodiment except for the difference between the inner cavity 1f of the method of the first embodiment and the inner cavity 2f of the method of the second embodiment.

In more detail, in a method for manufacturing a hollow piston in accordance with a second embodiment, each of head portions 21b respectively integrated with bridge portions 21a is long in comparison with each of the head portions 11b of the first embodiment and is in the form of a cylinder open at its outer side, and each of the head portions 22b of caps 22 is short in comparison with each of the head portions 12b of the caps 12.

Therefore, a friction welding step, a cutting after welding step, a coating step, a grinding step, a cavity forming step and a cutting step are the same as those of the first embodiment except that a jig employed in the second embodiment is different from the jig employed in the first embodiment in size.

In detail, welding surfaces 20a and 20b are formed on the opposing portions of the head portions 21b and 22b of a dual body 210 and two caps 22 by means of a cutting process, the dual body 210 and the caps 22 are welded together at a normal temperature in the atmosphere by means of a friction welding process to form an unfinished dual piston 20, the circumferential surface of the unfinished dual piston 20 is cut to form a head circumferential surface 2a, the entire surface of the unfinished dual piston 20 is coated to form a wear resisting layer, the head circumferential surface 2a is ground, the surfaces defining the rough cavities 21c of bridge portions 21a are cut to form a swash-plate receiving cavity 2b and a shoe socket 2c, and, finally, the unfinished dual piston 20 is parted into two pistons and grip protrusions 22c are cut away.

Of course, a technique, wherein the head portion 21b of the body portion 21 is identical to the head portion 22b of the cap 22b in their lengths, can pertain to this embodiment.

### [Third Embodiment]

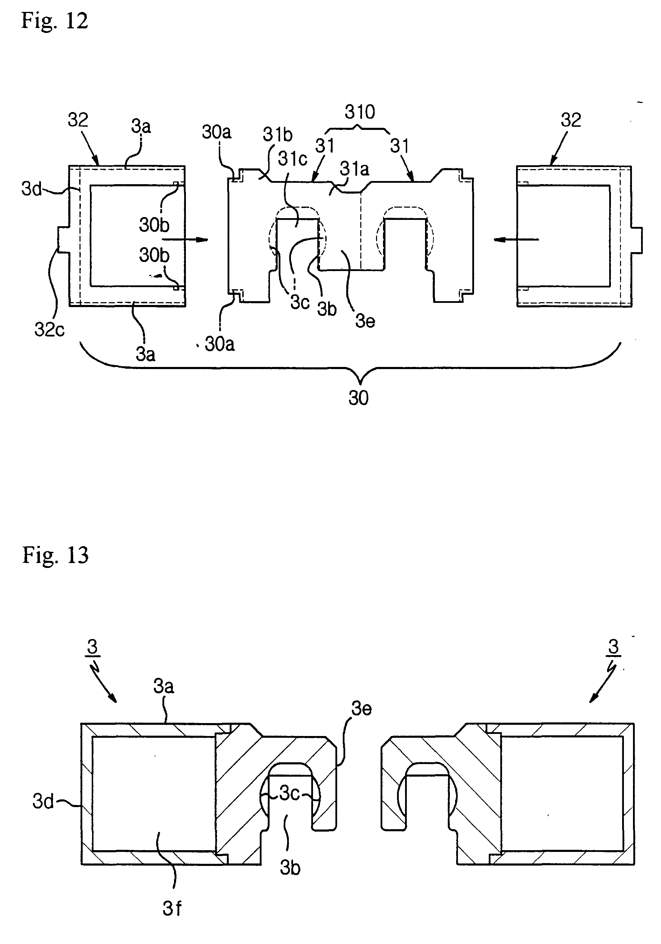

With reference to Figs. 12 and 13, a method for manufacturing a hollow piston for a compressor in accordance with a third embodiment is described.

In this step, an unfinished, solid-cylindrical dual body 31a having two bridge portions 31a and two head portions 31b and two caps 32 having open cavities are separately formed by means of a forging or casting process, which is the same as that of the first embodiment. Thereafter, stepped welding surfaces 30a and 30b are formed on the opposing portions of the head portions 31b and 32b of a dual body 310 and two caps 32 by means of a cutting process.

In detail, the outer circumferential surfaces of the head portions 31b are cut to form stepped welding surfaces 30a, while the inner circumferential surfaces of the head portions of the caps 32 are cut to form stepped welding surfaces 30b. The dual body 310 and the caps 32 are relatively rotated while the stepped welding surfaces 30a are in contact with the stepped welding surfaces 30b, so that the stepped welding surfaces 30a are frictionally welded to the stepped welding surfaces 30b, thereby forming the unfinished dual piston 30. This embodiment is different from the previous embodiments in that the caps 32 are easily combined with the dual body 310 temporarily because the stepped welding surfaces 30a are respectively engaged with the stepped welding surfaces 30b.

The remaining steps are the same as those of the previous embodiments, and, finally, two individual hollow pistons 3 are fabricated.

The non-described reference numerals 3a,3b,3c,3d,3e and 31c respectively designate a head outer circumferential surface, a swash-plate receiving cavity, a shoe socket, the front surface of the piston, the rear surface of the piston and the rough cavity of the bridge portion 31a.

### [Fourth Embodiment]

This embodiment is similar to the previous embodiments except for the steps of forming the outer circumferential surface of a piston by cutting the outer circumferential surface of an unfinished dual piston 10, 20 and 30 after cutting away grip portions 12c, 22c and 32c, forming swash-plate receiving cavities 1a, 2b and 3b by cutting the surfaces defining rough cavities 11c, 21c and 31c of bridge portions 11a, 21a and 31a, forming a wear resisting layer on the surface of the unfinished dual piston 10, 20 and 30 by coating the unfinished dual piston 10, 20 and 20, parting the unfinished dual piston 10, 20 and 30 into two unfinished pistons, and forming shoe sockets 1c, 2c and 3c by cutting the surfaces defining the swash-plate receiving cavities 1a, 2b and 3b.

### [Fifth Embodiment]

This embodiment is similar to the fourth embodiment except that an unfinished dual piston 10, 20 and 30 are parted into two hollow pistons 1, 2 and 3 after forming shoe sockets 1c, 2c and 3c by cutting the surfaces defining the swash-plate receiving cavities 1a, 2b and 3b.

As described above, the present invention provides a method for manufacturing a hollow piston for a compressor, which can simplify a machining process before a welding process because a minimal machining is performed only to prepare the welding surfaces for friction welding.

Additionally, the present invention provides a method for manufacturing a hollow piston for a compressor, which can reduce the equipment cost for manufacturing the piston because two caps can be easily welded to an unfinished dual body by means of simple relative rotation and, consequently, expensive equipment is not needed for embodying the method.

Further, the present invention provides a method for manufacturing a hollow piston for a compressor, which can lengthen the endurance period of the hollow piston because oxidation does not occur and, therefore, fine holes are not generated in the piston, and can prevent the compression performance of the compressor from being reduced because refrigerant gas is not discharged into the hollow piston through the fine holes.

Moreover, the present invention provides a method for manufacturing a hollow piston for a compressor, which can improve the productivity in manufacturing pistons and reduce the manufacturing cost of the piston because each process can be applied to two pistons at the same time and a welding process is easy and can be performed in a short period of time.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A method for manufacturing the hollow piston of a compressor, comprising the steps of:
forming a dual body and two caps separately, said dual body having two body portions that are symmetrically integrated and respectively have bridge portions and head portions, said two caps respectively having head portions that respectively have open cavities and grip protrusions that are respectively formed on the closed side surfaces of the head portions, said bridge portions respectively having rough cavities;
forming welding surfaces on two couples of opposing portions of said head portions of said dual body and said caps;
welding said caps to said dual body at their welding surfaces using frictional heat by relatively rotating at least one of said caps and said dual body while the welding surfaces of said dual body are in contact with the welding surfaces of said caps, thereby forming an unfinished dual hollow piston;
forming an outer circumferential surface of the piston by cutting an outer circumferential surface of said unfinished dual piston;
forming a wear resisting layer on a surface of said unfinished dual piston by coating said unfinished dual piston;
forming head outer circumferential surfaces by grinding outer circumferential surfaces of said head portions of said unfinished dual piston;
forming hemispherical shoe sockets by cutting surfaces defining swash-plate receiving cavities after forming said swash-plate receiving cavities by cutting surfaces defining the rough cavities of said bridge portions; and
parting said unfinished dual piston along its central line into two unfinished pistons, and cutting front and rear surfaces of the unfinished dual piston into two completed pistons.

2. The method according to claim 1, wherein said welding is performed at a normal temperature in the atmosphere.

3. The method according to claim 1, wherein said caps are rotated while said welding surfaces of the dual body are in contact with said welding surfaces of the caps and said dual body is fixed.

4. The method according to claim 1, wherein said dual body is rotated while said caps are fixed.

5. The method according to claim 1, wherein stepped welding surfaces are formed on opposing portions of head portions of said dual body and said caps.

6. The method according to claim 1, wherein head portions of said dual body are respectively formed to be longer than head portions of said caps so as to form open cavities respectively in the head portions of said dual body.

7. The method according to claim 1, wherein head portions of said caps are respectively formed to be longer than head portions of said dual body so as to form open cavities respectively in the head portions of said caps.

8. The method according to claim 7, central portions of the surfaces, at which said welding surfaces are formed, are cut to form depressions while said welding surfaces are formed.

9. A method for manufacturing the hollow piston of a compressor, comprising the steps of:
forming a dual body and two caps separately, said dual body having two body portions that are symmetrically integrated and respectively have bridge portions and head portions, said two caps respectively having head portions that respectively have open cavities and grip protrusions that are respectively formed on the closed side surfaces of the head portions, said bridge portions respectively having rough cavities;
forming welding surfaces on two couples of opposing portions of said head portions of said dual body and said caps;
welding said caps to said dual body at their welding surfaces using frictional heat by relatively rotating at least one of said caps and said dual body while the welding surfaces of said dual body are in contact with the welding surfaces of said caps, thereby forming an unfinished dual hollow piston;
cutting both sides and an outer circumferential surface of said unfinished dual piston;
forming swash-plate receiving cavities by cutting surfaces defining the rough cavities of said bridge portions;
forming a wear resisting layer on a surface of said unfinished dual piston by coating said unfinished dual piston;
parting said unfinished dual piston along its central line into two unfinished pistons; and
forming hemispherical shoe sockets by cutting surfaces defining said swash-plate receiving cavities, thereby completing two completed pistons.

10. A method for manufacturing the hollow piston of a compressor, comprising the steps of:
forming a dual body and two caps separately, said dual body having two body portions that are symmetrically integrated and respectively have bridge portions and head portions, said two caps respectively having head portions that respectively have open cavities and grip protrusions that are respectively formed on the closed side surfaces of the head portions, said bridge portions respectively having rough cavities;
forming welding surfaces on two couples of opposing portions of said head portions of said dual body and said caps;
welding said caps to said dual body at their welding surfaces using frictional heat by relatively rotating at least one of said caps and said dual body while the welding surfaces of said dual body are in contact with the welding surfaces of said caps, thereby forming an unfinished dual hollow piston;
cutting both sides and an outer circumferential surface of said unfinished dual piston;
forming swash-plate receiving cavities by cutting surfaces defining the rough cavities of said bridge portions;
forming a wear resisting layer on a surface of said unfinished dual piston by coating said unfinished dual piston;
forming hemispherical shoe sockets by cutting surfaces defining said swash-plate receiving cavities; and
parting said unfinished dual piston along its central line into two unfinished pistons, thereby completing two completed pistons.
